# EUROPÄISCHE PATENTSCHRIFT

(11) **EP 1 090 228 B1**
(45) Veröffentlichungstag und Bekanntmachung des Hinweises auf die Patenterteilung: **24.08.2005**
(21) Anmeldenummer: 99964468.5
(22) Anmeldetag: 28.12.1999
(51) Int. Cl.: F04B 19/02, F04B 53/10

(54) **KOLBENPUMPE**
PISTON PUMP
POMPE A PISTON

(30) Priorität: 22.04.1999 DE 19918124
(43) Veröffentlichungstag der Anmeldung: 11.04.2001
(73) Patentinhaber: ROBERT BOSCH GMBH, 70442 Stuttgart (DE)
(72) Erfinder: SCHULLER, Wolfgang, D-74343 Sachsenheim (DE); SCHUMANN, Beate, D-74357 Boennigheim (DE)
(86) Internationale Anmeldenummer: PCT/DE1999/004116
(87) Internationale Veröffentlichungsnummer: WO 2000/065231

(56) Entgegenhaltungen:
- DE-A- 4 107 979
- DE-A- 4 236 682
- US-A- 3 254 607
- US-A- 3 655 296
- US-A- 4 118 152

## Beschreibung

### Stand der Technik

Die Erfindung betrifft eine Kolbenpumpe mit den Merkmalen des Oberbegriffs des Anspruchs 1, die zur Verwendung in einer schlupfgeregelten, hydraulischen Fahrzeugbremsanlage vorgesehen ist.

Aus der DE 42 36 682 A1 ist eine Kolbenpumpe für hydraulische Fahrzeugbremsanlagen bekannt. Die bekannte Kolbenpumpe weist einen Kolben auf, der axial verschieblich in einer Zylinderbohrung eines Pumpengehäuses verschiebbar geführt ist. Der Kolben ist mit einem rotierend antreibbaren Exzenter, der an einem Stirnende des Kolbens angeordnet ist, zu einer axial hin- und hergehenden Hubbewegung antreibbar. Durch die Hubbewegung des Kolbens fördert die Kolbenpumpe in an sich bekannter Weise Fluid, wobei das Fluid bei der vorgesehenen Verwendung der Kolbenpumpe in einer hydraulischen Fahrzeugbremsanlage Bremsflüssigkeit ist. Der Kolben ist mit einer Kolbendichtung in der Zylinderbohrung abgedichtet, wobei die Kolbendichtung als Dichtmanschette ausgeführt ist und zugleich ein Rückschlagventil bildet, das in einer Richtung überströmbar ist. Die Kolbendichtung bildet somit zugleich ein Ventil, das eine Durchströmungsrichtung der Kolbenpumpe steuert. Die Kolbendichtung kann ein Ein- oder ein Auslassventil der Kolbenpumpe bilden.

### Vorteile der Erfindung

Bei der erfindungsgemäßen Kolbenpumpe mit den Merkmalen des Anspruchs 1 ist mindestens eines der die Durchflußrichtung durch die Kolbenpumpe steuernden Ventile durch eine Kolbendichtung ersetzt, die den Kolben im Pumpengehäuse bzw. in der Laufbuchse abdichtet. Die Kolbendichtung kann am Kolben oder auch feststehend im Pumpengehäuse oder der Laufbuchse angebracht sein. Die erfindungsgemäße Kolbendichtung ist so ausgebildet, daß sie zugleich als Rückschlagventil wirkt. Sie weist eine umlaufende Dichtlippe auf, die in der Pumpenbohrung des Pumpengehäuses bzw. der Laufbuchse oder am Kolben anliegt. Die Dichtlippe ist auf beiden Seiten mit dem zu fördernden Fluid beaufschlagt, wobei eine Druckdifferenz in einer Richtung bewirkt, daß die Dichtlippe von der Pumpenbohrung bzw. der Laufbuchse oder dem Kolben abgehoben wird und von dem Fluid überströmt werden kann, wogegen eine Druckdifferenz in entgegengesetzter Richtung die Dichtlippe an die Pumpenbohrung bzw. die Laufbuchse oder den Kolben andrückt, so daß die Dichtlippe abdichtet. Die wechselnde Druckdifferenz bewirkt der Kolben durch seine hin- und hergehende Hubbewegung zur Fluidförderung.

Die erfindungsgemäße Kolbenpumpe hat den Vorteil, daß mindestens ein die Strömungsrichtung durch die Kolbenpumpe steuerndes Ventil ersetzt wird durch eine ohnehin erforderliche Kolbendichtung. Es entfallen also ein Rückschlagventil mit einem Ventilschließkörper, einer Ventilschließfeder und einem Ventilsitz, dessen Teile hergestellt und montiert werden müssen. Die erfindungsgemäße Kolbenpumpe hat weniger Einzelteile, die Anzahl der Montageschritte zum Zusammenbau der Kolbenpumpe ist verringert.

Der Kolben der erfindungsgemäßen Kolbenpumpe ist als Hohlkolben ausgebildet, ein Verdrängungsraum der Kolbenpumpe, dessen Volumen während der hin- und hergehenden Hubbewegung des Kolbens verkleinerert und vergrößert wird und dadurch in an sich bekannter Weise die Fluidförderung bewirkt, befindet sich innerhalb des Kolbens. Diese Ausgestaltung der Erfindung hat den Vorteil, daß Sie durch die Unterbringung des Verdrängungsraums innerhalb des Kolbens kleinbauend, insbesondere in axialer Richtung kurzbauend ist. Diese Ausgestaltung der Erfindung ermöglicht einen kompakten Aufbau der Kolbenpumpe.

Ein im Pumpengehäuse festes Innenteil ragt in den als Hohlkolben ausgebildeten Kolben hinein. Der Kolben ist auf dem Innenteil axial verschieblich. Das Innenteil begrenzt den Verdrängungsraum im Innern des Kolbens auf einer Stirnseite. Die Abdichtung des Verdrängungsraums erfolgt mittels der Kolbendichtung, die am Innenteil oder innen am Kolben angebracht ist und die dichtend an einer Innenseite des Kolbens oder am Innenteil anliegt.

Vorzugsweise ist die Kolbendichtung einstückig mit dem Innenteil (Anspruch 3 6), das Innenteil einschließlich der Kolbendichtung ist erfindungsgemäß als Spritzgießteil aus Kunststoff in einem Arbeitsgang hergestellt . Dies senkt den Herstellungsaufwand und die Anzahl an Einzelteilen zusätzlich.

Die Unteransprüche haben vorteilhafte Ausgestaltungen und Weiterbildungen der im Anspruch 1 angegebenen Erfindung zum Gegenstand.

Gemäß Anspruch 2 ist die Dichtlippe hohlkegelstumpfförmig, sie weist die Form eines Hohlkonus auf, wobei sie sich vorzugsweise in Richtung ihres freien Randes verjüngt. Diese Form der Dichtlippe läßt die gewünschte Überströmung der Dichtlippe in einer Richtung zu und dichtet in entgegengesetzter Richtung zuverlässig und auch gegen hohen Druck ab.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

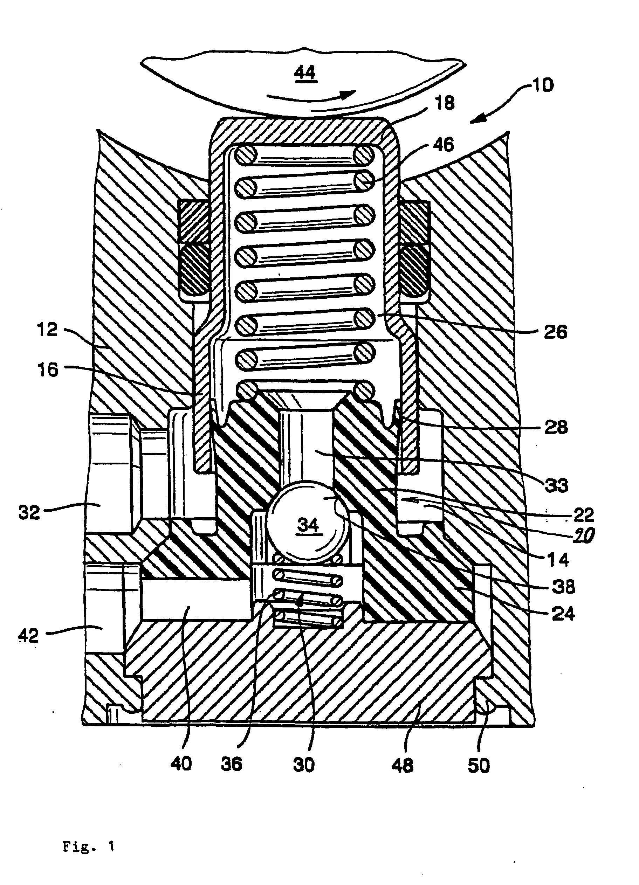

Die Erfindung wird nachfolgend anhand eines in der Zeichnung dargestellten, bevorzugt ausgewählten Ausführungsbeispiels näher erläutert. Die einzige Figur zeigt einen Achsschnitt einer erfindungsgemäßen Kolbenpumpe.

### Beschreibung des Ausführungsbeispiels

Die in der Zeichnung dargestellte erfindungsgemäße Kolbenpumpe 10 ist in einen Hydraulikblock 12 eingesetzt, der ein Pumpengehäuse bildet und nachfolgend als solches bezeichnet wird. Vom Hydraulikblock 12 ist in der Zeichnung der klaren Darstellung wegen lediglich ein die Kolbenpumpe 10 umgebendes Bruchstück dargestellt. Der Hydraulikblock 12 ist Teil einer im übrigen nicht dargestellten, hydraulischen Bremsdrucksteuerschaltung einer schlupfgeregelten Fahrzeug-bremsanlage. In den Hydraulikblock 12 sind außer der Kolbenpumpe 10 weitere hydraulische, nicht dargestellte Bauelemente wie beispielsweise Magnetventile eingesetzt und miteinander und mit der Kolbenpumpe 10 hydraulisch verschaltet.

In dem das Pumpengehäuse bildenden Hydraulikblock 12 ist eine gestufte Pumpenbohrung 14 angebracht, in der ein Kolben 16 axial verschieblich aufgenommen ist. Der Kolben 16 ist als Hohlkolben ausgebildet, er ist rohrförmig und weist eine mit dem Kolben 16 einstückige Kolbenstirnwand 18 auf, die den Kolben 16 an einer Stirnseite verschließt. Die andere Stirnseite des Kolbens 16 ist offen. Der Kolben 16 ist durch Umformen, beispielsweise durch Kaltschlagen, Fließpressen oder Tiefziehen hergestellt.

In den Kolben 16 ragt ein Innenteil 20, das feststehend in der Pumpenbohrung 14 im Pumpengehäuse 12 angebracht ist. Das Innenteil 20 weist einen Zapfen 22 auf, der in den Kolben 16 hineinragt. Der Zapfen 22 ist an seiner aus dem Kolben 16 vorstehenden Stirnseite einstückig mit einem scheibenförmigen Fuß 24 versehen, mit dem das Innenteil 20 in der Pumpenbohrung 14 befestigt ist. Der Zapfen 22 begrenzt einen Verdrängungsraum 26 im Innern des Kolbens 16 in der offenen Stirnseite des Kolbens 16. Ein Volumen des Verdrängungsraums 26 verkleinert und vergrößert sich bei einer axial hin- und hergehenden Hubbewegung des Kolbens 16, wodurch in an sich bekannter Weise eine Förderung von Fluid erfolgt. Das Innenteil 20 ist im dargestellten Ausführungsbeispiel als Kunststoffspritzteil hergestellt.

An einem Außenumfang des Zapfens 22 des Innenteils 20 ist eine umlaufende Kolbendichtung 28 ausgebildet, die mit dem Zapfen 22 einstückig ist. Die Kolbendichtung 28 liegt abdichtend an einem Innenumfang des Kolbens 16 an, sie dichtet den Verdrängungsraum 26 ab. Die Kolbendichtung 28 ist als umlaufende Dichtlippe ausgebildet, sie hat die Form eines Hohlkegelstumpfs, d. h. ihre Außen- und ihre Innenfläche sind kegelförmig. Ein freies keisringförmiges Ende der die Kolbendichtung 28 bildenden Dichtlippe ist in Richtung des Innenraums des Kolbens 16, also in Richtung des Verdrängungraums 26 gerichtet. An ihrem anderen Ende geht die Kolbendichtung 28 einstückig in den Zapfen 22 des Innenteils 20 über. Die Kolbendichtung 28 verjüngt sich in ihrem zapfenseitigen Ende in Richtung ihres freien Endes, wobei sie im Bereich ihres freien, im Durchmesser größeren Endes mit geringer Vorspannung am Innenumfang des Kolbens 16 anliegt.

Die als Dichtlippe ausgebildete Kolbendichtung 28 wirkt außer als Dichtung zugleich auch als Rückschlagventil, sie bildet ein Einlaßventil der erfindungsgemäßen Kolbenpumpe 10: Mit der Kolbenpumpe 10 zu förderndes Fluid, im dargestellten Ausführungsbeispiel Bremsflüssigkeit, die sich im Bereich der offenen Stirnseite des Kolbens 16 in der Pumpenbohrung 14 befindet, beaufschlagt die Kolbendichtung 28 auf deren Außenseite. Wird der Kolben 16 bei einem Rückhub des Kolbens 16 vom Fuß 24 des Innenteils 20 weg bewegt, so vergrößert sich ein Volumen des Verdrängungsraums 26 in dem als Hohlkolben ausgebildeten Kolben 16. Die Volumenvergrößerung des Verdrängungsraums 26 bewirkt einen Unterdruck im Verdrängungsraum 26 in bezug auf den Druck in der Pumpenbohrung 14 und somit eine Druckdifferenz zwischen der Außen- und der Innenseite der Kolbendichtung 28, wobei der Druck auf der Außenseite größer als auf der Innenseite ist. Diese Druckdifferenz bewirkt, daß die als Dichtlippe ausgebildete Kolbendichtung 28 radial nach innen gedrückt und vom Innenumfang des Kolbens 16 abgehoben wird. Bremsflüssigkeit aus der Pumpenbohrung 14 überströmt die Kolbendichtung 28 in Richtung des Verdrängungsraums 26. Das Fluid strömt zwischen der Kolbendichtung 28 und dem Innenumfang des Kolbens 16 aus der Pumpenbohrung 14 in den Verdrängungsraum 26.

Wird der Kolben 16 nach Beendigung des Rückhubs in Richtung des Fußes 24 des Innenteils 20 bewegt (Förderhub), verkleinert sich das Volumen des Verdrängungsraums 26. Dadurch entsteht ein Überdruck im Verdrängungsraum 26 in Bezug auf einen Druck in der Pumpenbohrung 14, ein auf die Innenseite der Kolbendichtung 28 wirkender Druck ist größer als ein auf die Außenseite der Kolbendichtung 28 wirkender Druck, wodurch die Kolbendichtung 28 dichtend am Innenumfang des Kolbens 16 anliegt. Die zuvor in den Verdrängungsraum 26 angesaugte Bremsflüssigkeit wird während des Förderhubs durch ein noch zu beschreibendes Auslaßventil 30 der Kolbenpumpe 10 verdrängt (gefördert). Da die Kolbendichtung 28 mit geringer Vorspannung am Innenumfang des Kolbens 16 anliegt, dichtet sie bereits bei Gleichdruck zwischen Innen- und Außenseite der Kolbendichtung 28 ab, so daß Leckageverluste bei Gleichdruck oder geringem Überdruck vermieden werden. Ein hoher Überdruck im Verdrängungsraum 26 drückt die Kolbendichtung 28 mit hoher Kraft an den Innenumfang des Kolbens 16 an, so daß auch bei hohem Überdruck im Verdrängungsraum 26 der Verdrängungsraum 26 sicher abgedichtet ist.

Das mit der Kolbendichtung 28 einstückige Innenteil 20 besteht aus Polyamid 6.6, dem zur Erhöhung seiner Festigkeit 20 % Kohlefasern zugesetzt sind. Es ist also ein Werkstoff gewählt, der ausreichend stabil für das Innenteil 20 ist und der die beiden Eigenschaften einer elastischen und damit zuverlässig abdichtenden und auch bei hohem Überdruck im Verdrängungsraum 26 stabilen Dichtlippe der Kolbendichtung 28 kombiniert. Die Kolbendichtung 28 kann auch als separater Dichtring mit umlaufender Dichtlippe ausgebildet und auf den Zapfen 22 des Innenteils 20 aufgesetzt sein (nicht dargestellt). Die Kolbendichtung 28 kann auch am Kolben 16 angebracht sein und am Zapfen 22, der in diesem Fall zylindrisch auszubilden ist, dichtend anliegen (nicht dargestellt). Auch ist es möglich, die Kolbendichtung 28 entgegengesetzt wie dargestellt zu orientieren, so daß ihr freies Ende vom Verdrängungsraum 26 weg weist. In diesem Fall wirkt die Kolbendichtung 28 als Auslaßventil der Kolbenpumpe 10.

Der Einlaß von Bremsflüssigkeit in die Pumpenbohrung 14 erfolgt durch eine Einlaßbohrung 32, die radial zur Pumpenbohrung 14 im Pumpengehäuse 12 angebracht ist und die im Bereich der offenen Stirnseite des Kolbens 16 in die Pumpenbohrung 14 mündet. Das Auslaßventil 30 ist als federbeaufschlagtes Rückschlagventil ausgebildet, es ist im Innenteil 20 angeordnet. Das Innenteil 20 ist von einem Mittelloch 33 axial durchsetzt, in dem das Auslaßventil 30 untergebracht ist. Das Mittelloch 33 erweitert sich unter Bildung eines konischen Ventilsitzes 38 in Richtung des Fußes 24 des Innenteils 20. Das Auslaßventil 30 weist eine Ventilkugel 34 als Ventilschließkörper auf, die von einer Schraubendruckfeder, welche eine Ventilschließfeder 36 bildet, gegen den konischen Ventilsitz 38 gedrückt wird.

Bremsflüssigkeit, die während des Förderhubs des Kolbens 16 aus dem sich verkleinernden Verdrängungsraum 26 verdrängt wird, strömt durch das als Rückschlagventil ausgebildete Auslaßventil 30 aus und gelangt durch drei sternförmig im Fuß 24 des Innenteils 20 angebrachte Auslaßkanäle 40 in eine Auslaßbohrung 42, die radial zur Pumpenbohrung 14 im Pumpengehäuse 12 angebracht ist

Der Antrieb des Kolbens 16 zu seiner axial hin- und hergehenden Hubbewegung erfolgt mittels eines elektromotorisch rotierend antreibbaren Exzenters 44, an dessen Umfang der Kolben 16 mit seiner Kolbenstirnwand 18 anliegt. Eine als Schraubendruckfeder ausgebildete Kolbenrückstellfeder 46 drückt den Kolben 16 mit seiner Kolbenstirnwand 18 gegen den Umfang des Exzenters 44 und hält auf diese Weise den Kolben 16 bei seinem Rückhub in Anlage am Umfang des Exzenters 44. Die Kolbenrückstellfeder 46 ist in den als Hohlkolben ausgebildeten Kolben 16 eingesetzt, sie befindet sich im Verdrängungsraum 26. Die Kolbenrückstellfeder 46 stützt sich am Innenteil 20 ab.

Auf einer dem Exzenter 44 abgewandten Seite ist die Pumpenbohrung 14 mit einem scheibenförmigen Verschlußteil 48 verschlossen. Das Verschlußteil 48 ist durch eine umlaufende Verstemmung 50 des Pumpengehäuses 12 in der Pumpenbohrung 14 befestigt und druckdicht gehalten. Das Verschlußteil 48 hält seinerseits das Innenteil 20 an dessen Fuß 24 in der Pumpenbohrung 14. Die Ventilschließfeder 36 des Auslaßventils 30 stützt sich am Verschlußteil 48 ab.

Die mit einer Dichtlippe ausgebildete und zugleich als Rückschlagventil wirkende, in einer Richtung überströmbare Kolbendichtung 28 ist nicht ausschließlich auf die Verwendung mit einem Hohlkolben 16 beschränkt, sie ist prinzipiell auch an einer Kolbenpumpe mit herkömmlichem Kolben verwendbar.

## Patentansprüche

1. Kolbenpumpe mit einem zu einer hin- und hergehenden Hubbewegung antreibbaren Kolben (16) und mit einem Rückschlagventil, welches eine Strömungsrichtung von mit der Kolbenpumpe (10) gefördertem Fluid durch die Kolbenpumpe (10) steuert, wobei die Kolbenpumpe (10) eine Kolbendichtung (28) aufweist, die einen Verdrängungsraum (26) der Kolbenpumpe (10) abdichtet und die das Rückschlagventil der Kolbenpumpe (10) bildet, wobei die Kolbendichtung (28) eine Dichtlippe aufweist, die bei einer an ihr wirksamen Druckdifferenz in einer Richtung überströmbar ist und die gegen eine Druckdifferenz in entgegengesetzter Richtung abdichtet, **dadurch gekennzeichnet, daß** der Kolben (16) als Hohlkolben ausgebildet ist, und daß ein Innenraum des Kolbens (16) einen Verdrängungsraum (26) der Kolbenpumpe (10) bildet, daß die Kolbenpumpe (10) ein feststehendes Innenteil (20) aufweist, das in eine offene Seite des Kolbens (16) hineinragt, wobei der Kolben (16) auf dem Innenteil (20) axial verschieblich und mit der Kolbendichtung (28) abgedichtet ist, und daß das Innenteil (20) ein Spritzteil aus Kunststoff ist.

2. Kolbenpumpe nach Anspruch 1, **dadurch gekennzeichnet, daß** die Dichtlippe (28) hohlkegelstumpfförmig ist.

3. Kolbenpumpe nach Anspruch 1, **dadurch gekennzeichnet, daß** die Kolbendichtung (28) einstückig mit dem Innenteil (20) ist.

## Claims

1. Piston pump having a piston (16) which can be driven to execute a reciprocating lifting motion and having a nonreturn valve, which controls a direction of flow through the piston pump (10) of fluid delivered by the piston pump (10), the piston pump (10) having a piston seal (28), which seals off a displacement space (26) of the piston pump (10) and forms the nonreturn valve of the piston pump (10), the piston seal (28) having a sealing lip which fluid can flow over in one direction with a pressure difference acting on the sealing lip and which forms a seal in the opposite direction against a pressure difference, **characterized in that** the piston (16) is designed as a hollow piston, and **in that** an interior of the piston (16) forms a displacement space (26) of the piston pump (10), **in that** the piston pump (10) has a stationary inner part (20) which projects into an open side of the piston (16), the piston (16) being axially displaceable on the inner part (20), sealed by the piston seal (28), and **in that** the inner part (20) is a plastics injection moulding.

2. Piston pump according to Claim 1, **characterized in that** the sealing lip (28) is in the shape of a hollow truncated cone.

3. Piston pump according to Claim 1, **characterized in that** the piston seal (28) is integral with the inner part (20).

## Revendications

1. Pompe à piston comportant un piston (16) entraîné suivant une course alternative et un clapet anti-retour commandant la direction d'écoulement du fluide dévidé par la pompe à piston (10),
la pompe à piston (10) ayant un joint de piston (28) qui réalise l'étanchéité de la chambre de refoulement (26) de la pompe (10) et constitue le clapet anti-retour de la pompe (10),
le joint de piston (28) ayant une lèvre d'étanchéité qui peut être contournée dans une direction sous l'effet d'une différence de pression agissant sur cette lèvre et qui assure l'étanchéité dans la direction opposée contre une différence de pression,
**caractérisée en ce que**
le piston (16) est un piston creux, et le volume intérieur du piston (16) forme une chambre de refoulement (26) de la pompe à piston (10),
la pompe à piston (10) ayant une pièce interne (20) fixe qui pénètre dans le côté ouvert du piston (16),
le piston (16) étant coulissant axialement sur la pièce interne (20) et rendu étanche par le joint de piston (28), et
la pièce interne (20) est une pièce injectée en matière plastique.

2. Pompe à piston selon la revendication 1,
**caractérisée en ce que**
la lèvre d'étanchéité (28) est en forme de tronc de cône creux.

3. Pompe à piston selon la revendication 1,
**caractérisée en ce que**
le joint de piston (28) est réalisé d'une seule pièce avec la pièce interne (20).
